# EUROPÄISCHE PATENTSCHRIFT

(11) **EP 0 794 986 B1**
(45) Veröffentlichungstag und Bekanntmachung des Hinweises auf die Patenterteilung: **17.01.2001**
(21) Anmeldenummer: 95940237.1
(22) Anmeldetag: 23.11.1995
(51) Int. Cl.: C09J 101/28, C09J 103/00, C08J 3/05, C09J 11/02, C08L 1/28, C08L 3/00

(54) **PULVERFÖRMIGER KLEBSTOFF**
POWDER-FORM ADHESIVE
ADHESIF PULVERULENT

(30) Priorität: 02.12.1994 DE 4442989
(43) Veröffentlichungstag der Anmeldung: 17.09.1997
(73) Patentinhaber: Henkel Kommanditgesellschaft auf Aktien, 40191 Düsseldorf (DE)
(72) Erfinder: HERLFTERKAMP, Bernhard, D-46236 Bottrop (DE); ABRAHAMS, Ethel, D-41747 Viersen (DE)
(86) Internationale Anmeldenummer: EP9504622
(87) Internationale Veröffentlichungsnummer: WO9617028

(56) Entgegenhaltungen:
- WO-A-92/13915
- FR-A- 2 282 235
- US-A- 2 807 591

## Beschreibung

Die Erfindung betrifft einen pulverförmigen Klebstoff auf der Basis von kalt-wasserlöslichen Polysacchariden, wie sie zur Herstellung von Kleistern und Leimen verwendet werden.

Für die Plakatierung im Außenbereich werden Trockenprodukte auf Basis von Stärke, Stärkederivaten sowie Cellulosederivaten oder aus Mischungen der vorgenannten Rohstoffe eingesetzt. Die so erhaltenen Produkte werden als Trockenmischungen verkauft und von den Anwendern mit Wasser bei Raumtemperatur gemischt, so daß Klebstoffflotten mit 2 bis 10 Gew.-%, insbesondere ca. 5 Gew.-% Festkörper erhalten werden. Ein Hauptproblem bei der Herstellung der Klebstoffflotten ist die Klumpenbildung beim Ansetzen, hervorgerufen durch wenig geeignete Rührwerke sowie durch die Quelleigenschaften der verwendeten Trockenmischungen. Wichtig für die gute Verarbeitbarkeit eines Klebstoffes zum Ankleben von Plakaten ist die möglichst rasche Auflösung der eventuell entstandenen Klumpen. Diese Klumpen verhindern durch die starke Quellung ihrer äußeren Schicht einen Wassereintritt in das Innere, so daß sie dort trocken bleiben und eine weitere Auflösung des Klumpens verhindern, zumindest aber zeitlich sich sehr stark verzögern.

Es ist seit langem bekannt, wasserlösliche Polysaccharide wie die Celluloseether Methylcellulose, Hydroxyethyl- und Hydroxypropyl-Cellulose mit Glyoxal zu behandeln, damit sie beim Einrühren in Wasser nicht zusammenbacken und klumpen. Inwieweit man tatsächlich sofort und bequem ohne kräftiges Durchrühren zu einer klumpenfreien Lösung kommt, hängt unter anderem von der Art der Behandlung mit Glyoxal ab.

Aus der DE-B-1 719 445 ist ein Verfahren zur Herstellung von verdickten Lösungen aus wasserlöslichen Umsetzungsprodukten von Celluloseether bekannt, wobei man feinkörnigen oder pulverförmigen trockenen Celluloseether durch Erwärmen im geschlossenen System oberflächlich bis zur Wasserunlöslichkeit mit Glyoxal oder Polyglyoxal vernetzt. Suspendiert man die so behandelten Celluloseether in Wasser und macht sie dann alkalisch, so erhält man deren kolloidale Lösung (s. Anspruch 1).

Aus der DE-C-2 415 556 ist bekannt, Polysaccharide bei ihrer Aufarbeitung mit einer wäßrigen Glyoxallösung zu verkneten. Nach Trocknung und Zerkleinerung durch Mahlen werden Pulver erhalten, die sich je nach Korngröße mehr oder weniger schnell und mehr oder weniger klumpenfrei in kaltem Wasser auflösen (siehe Spalte 1, Zeilen 40 - 51). Zur Verbesserung des Löseverhaltens wird in derselben Patentschrift ein weiteres Verfahren vorgeschlagen. Danach soll man das trockene, feinpulvrige Polysaccharid mit 0,2 - 5 Gew.-% wasserfreiem Polyglyoxal vermischen und die Mischung für eine halbe bis zwölf Stunden auf 50 - 150 °C erhitzen (siehe Anspruch 1).

Die erfindungsgemäße Aufgabe besteht darin, mit einfachen Mitteln die Klumpenbildung zu vermeiden bzw. entstandene Klumpen schnell zu beseitigen.

Die erfindungsgemäße Lösung ist den Patentansprüchen zu entnehmen. Sie besteht im wesentlichen darin, daß den bekannten pulverförmigen Klebstoffen auf der Basis von kalt-wasserlöslichen Polysacchariden grobkörnige Stoffe mit einer durchschnittlichen Korngröße von 0,5 bis 5 mm nach DIN 66165 zugesetzt werden, die in kaltem Wasser löslich sind, ohne die Viskosität zu erhöhen.

Der grobkörnige Stoff hat eine durchschnittliche Korngröße von insbesondere 1,0 bis 1,5 mm. Die geeignete Korngrößenfraktion kann hergestellt werden durch Siebe mit einer Maschenweite von 1 bis 2 mm. Vorzugsweise sind die grobkörnigen Stoffe Agglomerate aus feinkörnigen Partikeln. Sie können aber auch kompakt sein.

Die grobkörnigen Stoffe lösen sich innerhalb von 5 Minuten unter Rühren bei 20 °C in Wasser auf und ergeben eine neutrale Lösung. Besonders geeignet sind Salze von Alkali- und Erdalkalimetallen wie Chloride, Nitrate, Sulfate und Phosphate, insbesondere Natrium-, Calcium- und Magnesiumchlorid sowie Natriumsulfat. Besonders geeignet sind Zucker und Harnstoff.

Unter einem "wasserlöslichem" Polysaccharid ist ein Polysaccharid zu verstehen, das sich bei 20 °C in höchstens 30 Gewichts-Teilen Wasser löst. Es fallen vor allem Celluloseether darunter, wie z. B. Methylcellulose Methylhydroxyethylcellulose, Methylhydroxypropylcellulose und Carboxymethylcellulose. Aber auch Stärke und Stärkeether, wie z. B. Carboxymethylstärke sind brauchbar.

Der pulverförmige Klebstoff hat vorzugsweise zu 80 % eine Teilchengröße von < als 0,2 mm, bestimmt nach DIN 4188. Besonders bevorzugt sind Polysaccharide mit Teilchengrößen mit wenigstens 0,1 mm Durchmesser.

Selbstverständlich können die erfindungsgemäßen Klebstoffe neben den Polysacchariden und den grobkörnigen Stoffen noch die üblichen Zusatzstoffe enthalten, wie z. B. Konservierungsmittel, Farbstoffe Entschäumer, Frostschutzmittel und Redispergierpulver.

Die oben genannten Komponenten des pulverförmigen Klebstoffes sind in ihm mit folgenden Gewichtsanteilen enthalten:
- > 0 bis 100, insbesondere 10 bis 100 Gew.-% an Polysacchariden,
- 1 bis 50, insbesondere 1 bis 20 Gew.-% an grobkörnigen Stoffen und
- 0 bis 50, insbesondere 0,1 bis 10 Gew.-% an sonstigen Additiven.

Der erfindungsgemäße Klebstoff wird durch mechanische Mischung der Komponenten hergestellt, so daß der grobkörnige Stoff homogen verteilt ist. Die bei der Herstellung der Polysaccharid-Derivate entstehenden Salze oder sonstige wasserlösliche niedermolekulare Produkte fallen also nicht unter die Herstellung des erfindungsgemäßen Klebstoffes und auch nicht unter die Definition des grobkörnigen Stoffes.

Der erfindungsgemäße pulverförmige Klebstoff wird mit Wasser gemischt, so daß letztlich ein Klebstoff mit einem Feststoffgehalt von 2 bis 10, vorzugsweise von 4 bis 6 % entsteht. Selbst mit einfachen Rührgeräten wird bei Raumtemperatur innerhalb einer Zeit von 5 bis 15 Minuten ein klumpenfreier Kleister erhalten. Er eignet sich sehr gut zum Verkleben von Plakaten. Weitere Anwendungen sind: Papierverklebungen ganz allgemein, z. B. Verkleben von Papierzetteln auf Papier, Karton, Glas oder Metall.

Der Kleister ist dann als klumpenfrei anzusehen, wenn er keine Teilchen von einem Durchmesser von mehr als 0,05 mm aufweist.

Die Erfindung ist nun anhand von Beispielen im einzelnen erläutert:

### Beispiel 1 (Vergleichsbeispiel)

Es wird eine kaltwasserlösliche Stärke mit einer Korngrößenverteilung zwischen 20 µm und 1 000 µm und einem Anteil von ca. 10 Gew.-% (8 bis 12 Gew.-%) an Teilchen mit einem Durchmesser unter 50 µm in einem Laborrührer mit 600 Umdrehungen pro Minute mit einem 4teiligen Flügelrührer bei einer Flottengröße von ca. 400 g in einem 600-ml-Becherglas angesetzt. Es wird eine ca. 5%ige Lösung angesetzt, die eine Viskosität von 5 000 bis 10 000 mPas (Brookfield RVT 5/20/23) aufweist. Dazu wird so verfahren, daß das Wasser vorgelegt und bei laufendem Rührer die Stärke innerhalb von 30 bis 60 Sekunden eingestreut wird. Dabei entstehen Klumpen. Nach einer Rührzeit von 15 Minuten sind diese Klumpen noch erhalten.

### Beispiel 2

Es wird die gleiche Vorgehensweise gewählt wie unter Beispiel 1. Der Stärke wird aber vor dem Einstreuen ins Wasser 20 Gew.-% eines grobkörnigen Zuckers zugesetzt, dessen Korngröße zwischen 0,5 und 5 mm liegt. Die Stärke wird mit dem Zucker innig vermischt. Anschließend wird der Ansatz hergestellt, wie unter Beispiel 1 beschrieben. Nach einer Rührzeit von 15 Minuten ergibt sich eine klumpenfreie Flotte.

### Beispiel 3

Es wird wie unter Beispiel 2 vorgegangen. Anstelle der kaltwasserlöslichen Stärke wird eine kaltwasserlösliche Natrium-Carboxymethylcellulose mit einem Veretherungsgrad von 0,5 bis 0,7 und einer Korngrößenverteilung wie unter Beispiel 1 eingesetzt. Wiederum wird der Cellulose vor dem Einsetzen Zucker wie unter Beispiel 2 zugesetzt und vor dem Lösevorgang innig vermischt. Nach einer Rührzeit von 15 Minuten ergibt sich eine klumpenfreie Flotte.

## Patentansprüche

1. Pulverförmiger Klebstoff auf der Basis von kalt-wasserlöslichen Polysacchariden, gekennzeichnet durch einen Anteil von 1 bis 50 Gew.-% an mindestens einem grobkörnigen Stoff mit einer durchschnittlichen Korngröße von 0,5 bis 5 mm nach DIN 66165, der in kaltem Wasser löslich ist, ohne die Viskosität zu erhöhen.

2. Klebstoff nach Anspruch 1, dadurch gekennzeichnet, daß der grobkörnige Stoff eine durchschnittliche Korngröße von 1,0 bis 1,5 mm hat, gemessen nach DIN 66165.

3. Klebstoff nach Anspruch 1 oder 2, dadurch gekennzeichnet, daß der grobkörnige Stoff sich bei 20 °C innerhalb von 15, insbesondere von 5 Minuten unter Rühren neutral in Wasser auflöst und insbesondere aus Alkali- und Erdalkalisalzen sowie vorzugsweise aus Zucker und Harnstoff besteht.

4. Klebstoff nach mindestens einem der Ansprüche 1, 2 oder 3, dadurch gekennzeichnet, daß die Polysaccharide Stärke, Stärkederivate und Cellulosederivate sind, wie sie üblicherweise zur Herstellung von Kleistern und Leimen verwendet werden.

5. Verfahren zur Herstellung des Klebstoffes nach mindestens einem der Ansprüche 1 bis 4, dadurch gekennzeichnet, daß man die Komponenten mechanisch bis zur Homogenität mischt.

## Claims

1. A powder-form adhesive based on cold-water-soluble polysaccharides, characterized by a percentage content of 1 to 50% by weight of at least one coarse-particle substance with a mean particle size of 0.5 to 5 mm to DIN 66 165 which dissolves in cold water without any increase in viscosity.

2. An adhesive as claimed in claim 1, characterized in that the coarse particle substance has a mean particle size of 1.0 to 1.5 mm, as measured to DIN 66 165.

3. An adhesive as claimed in claim 1 or 2, characterized in that the coarse-particle substance dissolves neutrally in cold water in 15 minutes and more particularly 5 minutes at 20°C and consists in particular of alkali metal and alkaline earth metal salts and preferably of sugar and urea.

4. An adhesive as claimed in at least one of claims 1, 2 or 3, characterized in that the polysaccharides are starch, starch derivatives and cellulose derivatives as typically used in the production of pastes and glues.

5. A process for the production of the adhesive claimed in at least one of claims 1 to 4, characterized in that the components are mechanically mixed until homogeneous.

## Revendications

1. Adhésif pulvérulent à base de polysaccharides solubles dans l'eau froide, caractérisé par une proportion de 1 à 50 % en poids d'au moins une matière à gros grains possédant une grosseur de grain moyenne de 0,5 à 5 mm selon DIN 66165, ladite matières étant soluble dans l'eau froide sans accroître la viscosité.

2. Adhésif selon la revendication 1, caractérisé en ce que la matière à gros grains possède une grosseur de grain moyenne de 1,0 à 1,5 mm, déterminée selon DIN 66165.

3. Adhésif selon la revendication 1 ou 2, caractérisé en ce que la matière à gros grains se dissout par agitation dans de l'eau à 20 °C en donnant une solution neutre, en 15 minutes, en particulier en 5 minutes, et en ce qu'elle est constitué de sels de métaux alcalins et alcalino-terreux, ainsi que de sucre et d'urée.

4. Adhésif selon au moins une des revendications 1, 2 ou 3, caractérisé en ce que les polysaccharides sont de l'amidon, des dérivés d'amidon et des dérivés de cellulose, tels que ceux qui sont utilisées d'ordinaire pour la production de colles d'amidon et autres colles.

5. Procédé de production de l'adhésif selon au moins une des revendications 1 à 4, caractérisé en ce que l'on mélange les composants par un procédé mécanique jusqu'à obtention d'une préparation homogène.
